(19) **Europäisches Patentamt**
**European Patent Office**
**Office européen des brevets**

(11) **EP 4 286 430 B1**

(12) **EUROPEAN PATENT SPECIFICATION**

(45) Date of publication and mention
of the grant of the patent:
**04.03.2026 Bulletin 2026/10**

(21) Application number: **23743433.7**

(22) Date of filing: **17.01.2023**

(51) International Patent Classification (IPC):
**C08F 236/10** $^{(2006.01)}$   **C08F 279/04** $^{(2006.01)}$
**C08F 2/04** $^{(2006.01)}$   **C08F 4/70** $^{(2006.01)}$
**C08F 4/32** $^{(2006.01)}$

(52) Cooperative Patent Classification (CPC):
(C-Sets available)
**C08L 25/12; C08F 279/04; C08L 55/02**   (Cont.)

(86) International application number:
**PCT/KR2023/000779**

(87) International publication number:
**WO 2023/140586 (27.07.2023 Gazette 2023/30)**

(54) **METHOD OF PREPARING DIENE-BASED RUBBER POLYMER AND METHOD OF PREPARING GRAFT POLYMER COMPRISING THE SAME**

VERFAHREN ZUR HERSTELLUNG EINES DIENBASIERTEN KAUTSCHUKARTIGEN POLYMERS UND VERFAHREN ZUR HERSTELLUNG EINES PFROPFPOLYMERS DAMIT

PROCÉDÉ POUR PRODUIRE UN POLYMÈRE CAOUTCHOUTEUX À BASE DE DIÈNE ET PROCÉDÉ POUR PRODUIRE UN POLYMÈRE GREFFÉ LE CONTENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.01.2022 KR 20220007387**
**16.01.2023 KR 20230006116**

(43) Date of publication of application:
**06.12.2023 Bulletin 2023/49**

(73) Proprietor: **LG Chem, Ltd.**
**Yeoui-daero, Youngdungpo-gu**
**Seoul 07336 (KR)**

(72) Inventors:
• **KIM, Ki Hyun**
**Daejeon 34122 (KR)**
• **JEONG, Young Hwan**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 0 589 291**   **EP-A2- 0 318 052**
**KR-A- 20170 065 024**   **KR-A- 20180 047 747**
**KR-A- 20190 046 517**   **US-A- 3 497 488**

• **KORTHALS BRIGITTE, BERKEFELD ANDREAS, AHLMANN MARTIN, MECKING STEFAN: "Catalytic Polymerization of Butadiene in Aqueous Systems with Cationic Nickel(II) Complexes", MACROMOLECULES, AMERICAN CHEMICAL SOCIETY, US, vol. 41, no. 22, 25 November 2008 (2008-11-25), US , pages 8332 - 8338, XP093079786, ISSN: 0024-9297, DOI: 10.1021/ma8016579**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)

C-Sets
**C08F 136/06, C08F 2/26;**
**C08F 136/06, C08F 2/38;**
**C08F 136/06, C08F 4/6192;**
**C08F 279/04, C08F 212/08, C08F 220/44;**
**C08L 25/12, C08L 51/04**

**EP 4 286 430 B1**

**Description**

[Technical Field]

The present invention relates to a method of preparing a diene-based rubber polymer and a method of preparing a graft polymer comprising the same, and specifically, to a method of preparing a diene-based rubber polymer, which is able to adjust the microstructure of a diene-based rubber polymer so that excellent room-temperature and low-temperature impact resistance and a high final polymerization conversion rate are implemented, and a method of preparing a graft polymer comprising the same.

[Background Art]

Diene-based rubber polymers are widely used as impact modifiers for graft copolymers due to having excellent rubber characteristics. The diene-based rubber polymer may be prepared by emulsion polymerization or bulk polymerization. In the case of the diene-based rubber polymer prepared by emulsion polymerization, there are factors that cannot be artificially adjusted due to a radical initiator used in polymerization. Specific examples of the factors include the microstructure and crosslinked structure of the diene-based rubber polymer. The contents of a 1,4-cis bond, a 1,4-trans bond, and a 1,2-bond in the microstructure are determined in a thermodynamically stable direction, and the crosslinked structure is affected by a polymerization conversion rate due to the characteristics of a diene-based monomer and is naturally formed in a large amount as a polymerization conversion rate increase.

However, since the diene-based rubber polymer has difficulty in adjusting physical properties by adjusting a molecular structure due to characteristics of the microstructure, research on artificially adjusting the microstructure of the diene-based rubber polymer is required.

[Related Art Documents]

[Patent Documents]

(Patent Document 1) JP2009-108255A

US 3,497,488 A discloses a polybutadiene polymer of which a microstructure contains 35% of cis-1,4-units, 55% of trans-1,4-units and 10% of 1,2-units.

[Disclosure]

[Technical Problem]

The present invention is directed to providing a method of preparing a diene-based rubber polymer whose microstructure is adjusted to improve room-temperature and low-temperature impact resistance, and a method of preparing a graft polymer including the same.

[Technical Solution]

One aspect of the present invention provides a method of preparing a diene-based rubber polymer, which comprises: initiating polymerization of a monomer in the presence of a coordination metal catalyst; and adding a radical initiator when a polymerization conversion rate is 20 to 75% and performing the polymerization of the monomer, wherein the monomer is a diene-based monomer; or a diene-based monomer and an aromatic vinyl-based monomer, wherein the coordination metal catalyst comprises nickel and a ligand,
wherein the ligand is one or more selected from the group consisting of an allyl, an arene-sulfide, and an arene-stibine.
(

Still another aspect of the present invention provides a method of preparing a graft polymer, which comprises: preparing a diene-based rubber polymer by the preparation method according tothe invention; and graft-polymerizing an aromatic vinyl-based monomer and a vinyl cyanide-based monomer onto the diene-based rubber polymer.

Further embodiments are disclosed in the dependent claims.

[Advantageous Effects]

According to a preparation method of the present invention, since the microstructure of a diene-based rubber polymer can be adjusted, specifically, the contents of a 1,4-cis bond, a 1,4-trans bond, and a 1,2-bond can be adjusted, a diene-based rubber polymer and a graft polymer, which have improved room-temperature and low-temperature impact resistance, can be provided.

[Modes of the Invention]

Hereinafter, the present invention will be described in further detail to help in understanding the present invention.
Terms and words used in this specification and claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technical spirit of the present invention.
As used herein, the term "polymerization conversion rate" refers to the degree of formation of a polymer by polymerization of monomers and may be calculated by the following equation.

Polymerization conversion rate (%) = [(Total weight of monomers added until polymerization is terminated) - (Total weight of unreacted monomers when polymerization conversion rate is measured)]/(Total weight of monomers added until polymerization is terminated) $\times$ 100

In the present invention, an "average particle diameter" may refer to an arithmetic average particle diameter in the particle size distribution as measured by dynamic light scattering, that is, an average particle diameter based on a scattering intensity distribution. An average particle diameter may be measured using Nicomp 370 HPL equipment (commercially available from PSS Nicomp).
In the present invention, a "glass transition temperature" may be measured using a differential scanning calorimeter.
In the present invention, a "gel content" may be calculated after a diene-based rubber polymer latex is coagulated, washed, and dried to prepare a section, and the section is separated into a sol and a gel.
Specifically, a diene-based rubber polymer latex is coagulated with a dilute aqueous solution of sulfuric acid and then washed. The washed material is primarily dried in a vacuum oven set at 60 °C for 24 hours and cut into sections with scissors. 1 g of the section is added to 100 g of toluene and stored in a dark room set at 23 °C for 48 hours so that the section is separated into a sol and a gel. Then, the gel is secondarily dried in an oven set at 85 °C for 6 hours, the secondarily dried material is weighed, and results thereof are substituted into the following equation to calculate a gel content.

Gel content (wt%) = (Weight of secondarily dried material)/(Weight of section used in preparation of secondarily dried material) $\times$ 100

In the present invention, the contents (mol%) of a 1,4-cis bond, a 1,4-trans bond, and a 1,2-bond in a microstructure may be calculated by a Hampton method using an infrared spectrometer.
As used herein, the term "diene-based monomer" may be one or more selected from the group consisting of 1,3-butadiene, isoprene, chloroprene, and piperylene, with 1,3-butadiene being preferred.
As used herein, the term "aromatic vinyl-based monomer" may be one or more selected from the group consisting of styrene, $\alpha$-methyl styrene, p-methyl styrene, and 2,4-dimethyl styrene, with styrene being preferred. A unit derived from the aromatic vinyl-based monomer may be an aromatic vinyl-based monomer unit.
As used herein, the term "vinyl cyanide-based monomer" may be one or more selected from the group consisting of acrylonitrile, methacrylonitrile, 2-ethyl-acrylonitrile, and 2-chloroacrylonitrile, with acrylonitrile being preferred. A unit derived from the vinyl cyanide-based monomer may be a vinyl cyanide-based monomer unit.
In the present invention, an "emulsifying agent" may be one or more selected from the group consisting of sodium dicyclohexyl sulfosuccinate, sodium dihexyl sulfosuccinate, sodium di-2-ethylhexyl sulfosuccinate, potassium di-2-ethylhexyl sulfosuccinate, sodium dioctyl sulfosuccinate, sodium dodecyl sulfate, sodium dodecyl benzene sulfonate, sodium octadecyl sulfate, sodium oleyl sulfate, potassium octadecyl sulfate, potassium rosinate, and sodium rosinate, with sodium dodecyl benzene sulfonate being preferred.
In the present invention, a "molecular weight adjusting agent" may be one or more selected from the group consisting of an $\alpha$-methyl styrene dimer, t-dodecyl mercaptan, n-dodecyl mercaptan, t-octyl mercaptan, n-octyl mercaptan, carbon tetrachloride, methylene chloride, methylene bromide, tetraethylthiuram disulfide, dipentamethylenethiuram disulfide, and diisopropyl xanthogen disulfide, with t-dodecyl mercaptan being preferred.
In the present invention, an "electrolyte" may be one or more selected from the group consisting of KCl, NaCl, KOH, KHCO$_3$, NaHCO$_3$, K$_2$CO$_3$, Na$_2$CO$_3$, KHSO$_3$, NaHSO$_3$, K$_4$P$_2$O$_7$, Na$_4$P$_2$O$_7$, K$_3$PO$_4$, Na$_3$PO$_4$, K$_2$HPO$_4$, and

$Na_2HPO_4$, with one or more selected from the group consisting of KOH and $K_2CO_3$ being preferred.

In the present invention, a "redox-based catalyst" may be one or more selected from the group consisting of sodium formaldehyde sulfoxylate, sodium ethylenediaminetetraacetate, ferrous sulfate, dextrose, tetrasodium pyrophosphate, sodium pyrophosphate anhydrous, and sodium sulfate, with one or more selected from the group consisting of ferrous sulfate, dextrose, and tetrasodium pyrophosphate being preferred.

As used herein, the term "aqueous solvent" may be ion-exchanged water or distilled water.

## 1. Preparation of diene-based rubber polymer

A method of preparing a diene-based rubber polymer according to one aspect of the present invention includes: initiating polymerization of a monomer in the presence of a coordination metal catalyst; and adding a radical initiator when a polymerization conversion rate is 20 to 75% and performing the polymerization of the monomer, wherein the monomer is a diene-based monomer or a diene-based monomer and an aromatic vinyl-based monomer, wherein the coordination metal catalyst comprises nickel and a ligand, wherein the ligand is one or more selected from the group consisting of an allyl, an arene-sulfide, and an arene-stibine.

Hereinafter, the method of preparing a diene-based rubber polymer according to one aspect of the present invention will be described in detail.

### 1) Initiation of polymerization

First, polymerization of a monomer is initiated in the presence of a coordination metal catalyst. In this case, the monomer is a diene-based monomer; or a diene-based monomer and an aromatic vinyl-based monomer.

When polymerization of a monomer is initiated under the above-described condition, a diene-based rubber polymer having a low glass transition temperature and improved preparation efficiency can be prepared. When polymerization is initiated in the presence of a radical initiator instead of a coordination metal catalyst, a diene-based rubber polymer having excellent room-temperature and low-temperature impact resistance may not be prepared due to having a high glass transition temperature despite excellent preparation efficiency.

An amount of the coordination metal catalyst may be 0.001 to 0.500 parts by weight, preferably 0.005 to 0.300 parts by weight, and more preferably 0.010 to 0.100 parts by weight with respect to 100 parts by weight of a total amount of the monomer added in the method of preparing a diene-based rubber polymer. When the above-described condition is satisfied, a diene-based rubber polymer having a low glass transition temperature and improved preparation efficiency can be prepared. Also, the amount of a coordination metal catalyst remaining in the diene-based rubber polymer is decreased, which cannot adversely affect the characteristics of the diene-based rubber polymer.

A metal included in the coordination metal catalyst is nickel whose reaction efficiency and selectivity for a diene-based monomer are excellent.

A "ligand" included in the coordination metal catalyst is an essential component for suppressing the deactivation of a coordination metal and simultaneously ensuring the stability of the coordination metal catalyst against water used in emulsion polymerization. Generally, when the stability of the coordination metal catalyst against water increases, reaction efficiency for the diene-based monomer tends to decrease. However, when a specific ligand is selected, both stability against water and reaction efficiency for a diene-based monomer can be increased. Therefore, selection of a ligand in the coordination metal catalyst is very important, and the above-described specific ligand is one or more electron-rich compound selected from the group consisting of an allyl, an arene-sulfide, and an arene-stibine.

Specifically, the coordination metal catalyst may be, for example, $[(\eta^3\text{-}C_3H_5)Ni(\eta^6\text{-}BHT)][B(3,5\text{-}(CF_3)_2C_6H_3)_4]$, and the BHT may be 3,5-di-tert-butyl-4-hydroxytoluene.

Meanwhile, when polymerization of a monomer is initiated in the presence of a general metal catalyst instead of the coordination metal catalyst, stability against water is degraded, and thus the activity of the catalyst is degraded. As a result, it is difficult to perform polymerization.

The polymerization may be emulsion polymerization and performed in the presence of one or more selected from the group consisting of an emulsifying agent, an electrolyte, a molecular weight adjusting agent, and an aqueous solvent in addition to the coordination metal catalyst.

The type of the emulsifying agent has been described above, and the amount of the emulsifying agent may be 0.5 to 5.0 parts by weight, and preferably 0.8 to 2.5 parts by weight with respect to 100 parts by weight of a total amount of the monomer added in the preparation of a diene-based rubber polymer. When the above-described condition is satisfied, a diene-based rubber polymer with a desired size can be prepared, and polymerization stability can be improved.

The type of the electrolyte has been described above, and the amount of the electrolyte may be 0.3 to 3.0 parts by weight, and preferably 0.5 to 1.5 parts by weight with respect to 100 parts by weight of a total amount of the monomer added in the preparation of a diene-based rubber polymer. When the above-described condition is satisfied, polymerization stability can be improved.

The type of the molecular weight adjusting agent has been described above, and the amount of the molecular weight adjusting agent may be 0.1 to 1.0 parts by weight, and preferably 0.2 to 0.5 parts by weight with respect to 100 parts by weight of a total amount of the monomer added in the preparation of a diene-based rubber polymer. When the above-described condition is satisfied, the time taken to prepare a diene-based rubber polymer can be shortened.

## 2) Performance of polymerization

Next, a radical initiator is added when a polymerization conversion rate is 20 to 75%, and the polymerization of a monomer is performed.

When a coordination metal catalyst is added instead of a radical initiator at the above-described time point, although a diene-based rubber polymer having a low glass transition temperature is prepared, a final polymerization conversion rate is substantially decreased, and thus preparation efficiency may be substantially degraded.

When an excessive amount of the coordination metal catalyst is present in the initiation of polymerization and then a radical initiator is not added, a final polymerization conversion rate may not be sufficiently increased, and a gel content in a diene-based rubber polymer may be decreased to degrade rubber characteristics.

In addition, the radical initiator may be added when a polymerization conversion rate is 20 to 75%, preferably when a polymerization conversion rate is 30 to 70%, and more preferably when a polymerization conversion rate is 50 to 70%. When the radical initiator is added earlier than the above-described time point, the microstructure of a diene-based rubber polymer is not smoothly adjusted, and thus impact resistance may not be improved. When the radical initiator is added later than the above-described time point, a polymerization time is increased, and thus preparation efficiency is degraded.

An amount of the radical initiator may be 0.01 to 2.00 parts by weight, and preferably 0.10 to 0.50 parts by weight with respect to 100 parts by weight of a total amount of the monomer added in the method of preparing a diene-based rubber polymer. When the above-described condition is satisfied, polymerization can stably proceed, and a diene-based rubber polymer having an appropriate molecular weight can be prepared.

The radical initiator may be one or more selected from the group consisting of sodium persulfate, potassium persulfate, ammonium persulfate, t-butyl hydroperoxide, cumene hydroperoxide, ferrous sulfate, dextrose, and tetrasodium pyrophosphate, with potassium persulfate having excellent price competitiveness being preferred.

The polymerization is preferably terminated when the polymerization conversion rate is 90% or more, and preferably 93% or more. When the above-described condition is satisfied, considering the polymerization time, a diene-based rubber polymer having improved preparation efficiency and excellent physical properties can be prepared.

## 2. Diene-based rubber polymer

A diene-based rubber polymer has a microstructure including 30 to 75 mol% of a 1,4-cis bond, 15 to 55 mol% of a 1,4-trans bond, and 7 to 16 mol% of a 1,2-bond, and preferably 30 to 70 mol% of a 1,4-cis bond, 20 to 50 mol% of a 1,4-trans bond, and 5 to 14 mol% of a 1,2-bond. When the above-described condition is satisfied, a diene-based rubber polymer having excellent room-temperature and low-temperature impact resistance due to having a low glass transition temperature, specifically, a glass transition temperature of less than -85 °C, can be prepared.

However, when a 1,4-cis bond is included below the above-described range, the glass transition temperature of a diene-based rubber polymer is not decreased, and thus an impact resistance improvement effect is insignificant. Also, thermodynamically, it is difficult for a diene-based rubber polymer, which is prepared using only a radical initiator or prepared by the preparation method according to one aspect of the present invention, to include a 1,4-cis bond above the above-described range. On the other hand, when a diene-based rubber polymer is prepared using only a coordination metal catalyst, it is possible for the diene-based rubber polymer to include a 1,4-cis bond above the above-described range, but even when a low glass transition temperature is exhibited by minimization of a crosslinking reaction, a diene-based rubber polymer having excellent room-temperature and low-temperature impact resistance may not be prepared.

In addition, thermodynamically, it is difficult for a diene-based rubber polymer, which is prepared using only a radical initiator or prepared by the preparation method according to one aspect of the present invention, to include a 1,4-trans bond below the above-described range. When a 1,4-trans bond is included above the above-described range, the glass transition temperature of a diene-based rubber polymer is increased, and thus the impact resistance of a diene-based rubber polymer may be degraded.

Additionally, when a 1,2-bond is included below the above-described range, preparation efficiency is degraded during graft polymerization. When a 1,2-bond is included above the above-described range, a glass transition temperature is substantially increased, and thus a diene-based rubber polymer having excellent room-temperature and low-temperature impact resistance may not be prepared.

The diene-based polymer may have a glass transition temperature of -100.0 to -85.0 °C, and preferably -98.0 to -86.0 °C. When the above-described condition is satisfied, a diene-based rubber polymer having excellent room-temperature and low-temperature impact resistance can be prepared.

The diene-based rubber polymer may have a gel content of 65.0 to 82.0 wt%, and preferably 70.0 to 77.0 wt%. When the above-described condition is satisfied, a diene-based rubber polymer whose room-temperature and low-temperature impact resistance and stress are excellent can be prepared.

The diene-based rubber polymer may be prepared by the method of preparing a diene-based rubber polymer according to one aspect of the present invention.

### 3. Method of preparing graft polymer

A method of preparing a graft polymer according to still another aspect of the present invention comprises: preparing a diene-based rubber polymer by the preparation method according to one aspect of the present invention; and graft-polymerizing an aromatic vinyl-based monomer and a vinyl cyanide-based monomer onto the diene-based rubber polymer.

The diene-based rubber polymer may be in the form of latex dispersed in water in a colloidal state.

An amount of the diene-based rubber polymer may be 45 to 75 parts by weight, and preferably 50 to 70 parts by weight with respect to 100 parts by weight of a total amount of the diene-based rubber polymer, the aromatic vinyl-based monomer, and the vinyl cyanide-based monomer. When the above-described range is satisfied, the impact resistance and processability of a graft polymer can be improved.

An amount of the aromatic vinyl-based monomer may be 15 to 45 parts by weight, and preferably 20 to 40 parts by weight with respect to 100 parts by weight of a total amount of the diene-based rubber polymer, the aromatic vinyl-based monomer, and the vinyl cyanide-based monomer. When the above-described range is satisfied, the chemical resistance, stiffness, impact resistance, processability, and surface gloss of a graft polymer can be improved.

An amount of the vinyl cyanide-based monomer may be 1 to 20 parts by weight, and preferably 3 to 17 parts by weight with respect to 100 parts by weight of a total amount of the diene-based rubber polymer, the aromatic vinyl-based monomer, and the vinyl cyanide-based monomer. When the above-described range is satisfied, the chemical resistance, stiffness, impact resistance, processability, and surface gloss of a thermoplastic resin composition can be improved.

The polymerization may be performed in the presence of one or more selected from the group consisting of an emulsifying agent, an initiator, a redox-based catalyst, a molecular weight adjusting agent, and ion-exchanged water.

An amount of the emulsifying agent may be 0.01 to 2.00 parts by weight or 0.10 to 0.60 parts by weight with respect to 100 parts by weight of a total amount of the diene-based rubber polymer, the aromatic vinyl-based monomer, and the vinyl cyanide-based monomer, with the range of 0.10 to 1.50 parts by weight being preferred. When the above-described range is satisfied, emulsion polymerization can be easily performed, polymerization stability and latex stability can be improved, and the amount of emulsifying agent remaining in a graft polymer can be minimized.

An amount of the initiator may be 0.010 to 1.000 parts by weight or 0.100 to 0.500 parts by weight with respect to 100 parts by weight of a total amount of the diene-based rubber polymer, the aromatic vinyl-based monomer, and the vinyl cyanide-based monomer, with the range of 0.100 to 0.500 parts by weight being preferred. When the above-described range is satisfied, emulsion polymerization can be easily performed, and the amount of initiator remaining in a graft polymer can be minimized.

An amount of the redox-based catalyst may be 0.0100 to 0.5000 parts by weight or 0.0500 to 0.4000 parts by weight with respect to 100 parts by weight of a total amount of the diene-based rubber polymer, the aromatic vinyl-based monomer, and the vinyl cyanide-based monomer, with the range of 0.0500 to 0.4000 parts by weight being preferred. When the above-described range is satisfied, a final polymerization conversion rate can be further increased.

An amount of the molecular weight adjusting agent may be 0.01 to 1.00 parts by weight or 0.05 to 0.50 parts by weight with respect to 100 parts by weight of a total amount of the diene-based rubber polymer, the aromatic vinyl-based monomer, and the vinyl cyanide-based monomer, with the range of 0.05 to 0.50 parts by weight being preferred. When the above-described range is satisfied, the weight-average molecular weight of a shell can be appropriately adjusted.

### 4. Thermoplastic resin composition

A thermoplastic resin composition includes a graft polymer prepared according to still another aspect of the present invention and a non-grafted polymer including an aromatic vinyl-based monomer unit and a vinyl cyanide-based monomer unit.

The non-grafted polymer may impart heat resistance, stiffness, and processability to a thermoplastic resin composition.

The non-grafted polymer may include the aromatic vinyl-based monomer unit and the vinyl cyanide-based monomer unit in a weight ratio of 85:15 to 60:40, and preferably in a weight ratio of 80:20 to 65:35. When the above-described range is satisfied, a thermoplastic resin composition can harmoniously achieve heat resistance, impact resistance, and processability.

A weight ratio of the graft polymer and the non-grafted polymer may be 15:85 to 35:65, and preferably 20:80 to 30:70. When the above-described range is satisfied, the chemical resistance, impact resistance, heat stability, colorability, fatigue resistance, stiffness, and processability of a molded article made of a thermoplastic resin composition can be improved.

Hereinafter, examples of the present invention will be described in detail so that those of ordinary skill in the art can easily carry out the present invention. However, it should be understood that the present invention can be implemented in various forms, and that the examples are not intended to limit the present invention.

**Example 1**

<Preparation of diene-based rubber polymer>

55 parts by weight of ion-exchanged water, 100 parts by weight of 1,3-butadiene, 1.5 parts by weight of a $C_{16}$ to $C_{18}$ fatty acid metal salt, and 0.15 parts by weight of potassium carbonate were added to a nitrogen-substituted reactor. Then, the temperature of the reactor was raised to 35 °C. Subsequently, 0.150 parts by weight of $[(\eta^3\text{-}C_3H_5)Ni(\eta^6\text{-}BHT)]$ $[B(3,5\text{-}(CF_3)_2C_6H_3)_4]$ (wherein BHT is 3,5-di-tert-butyl-4-hydroxytoluene) was added to the reactor, and polymerization was initiated and performed. When a polymerization conversion rate reached 30%, 0.3 parts by weight of potassium persulfate and 0.3 parts by weight of t-dodecyl mercaptan were added. Then, polymerization was performed while slowly raising the temperature of the reactor to 80 °C. When a polymerization conversion rate reached 93%, polymerization was terminated to prepare a diene-based rubber polymer latex.

<Preparation of graft polymer>

A monomer mixture including 30 parts by weight of styrene, 10 parts by weight of acrylonitrile, 100 parts by weight of ion-exchanged water, 0.05 parts by weight of t-butyl hydroperoxide, 0.5 parts by weight of potassium rosinate, and 0.5 parts by weight of t-dodecyl mercaptan was prepared.
Then, an activator mixture including 0.0100 parts by weight of dextrose, 0.0100 parts by weight of tetrasodium pyrophosphate, and 0.0010 parts by weight of ferrous sulfate was prepared.
60 parts by weight (based on a solid content) of the diene-based rubber polymer latex and 10 parts by weight of ion-exchanged water were added to a nitrogen-substituted reactor, and the temperature of the reactor was raised to 55 °C. Polymerization was performed while continuously adding the monomer mixture and the activator mixture to the reactor for 2 hours. After the continuous addition was completed, 0.0050 parts by weight of dextrose, 0.0050 parts by weight of tetrasodium pyrophosphate, 0.0005 parts by weight of ferrous sulfate, and 0.1 parts by weight of t-butyl hydroperoxide were added to the reactor, the temperature of the reactor was raised to 80 °C for an hour, and polymerization was terminated to prepare a graft polymer latex.
The graft polymer latex was coagulated, aged, washed, dehydrated, and dried to prepare graft polymer powder.

<Preparation of thermoplastic resin composition>

27.5 parts by weight of the graft polymer powder and 72.5 parts by weight of a vinyl-based non-grafted polymer (styrene/acrylonitrile polymer, 92 HR commercially available from LG Chem.) were mixed to prepare a thermoplastic resin composition.

**Example 2**

A diene-based rubber polymer, a graft polymer, and a thermoplastic resin composition were prepared in the same manner as in Example 1, except that 0.3 parts by weight of potassium persulfate and 0.3 parts by weight of t-dodecyl mercaptan were not added when a polymerization conversion rate reached 30% and added when a polymerization conversion rate reached 50%.

**Example 3**

A diene-based rubber polymer, a graft polymer, and a thermoplastic resin composition were prepared in the same manner as in Example 1, except that 0.3 parts by weight of potassium persulfate and 0.3 parts by weight of t-dodecyl mercaptan were not added when a polymerization conversion rate reached 30% and added when a polymerization conversion rate reached 70%.

**Comparative Example 1**

A diene-based rubber polymer, a graft polymer, and a thermoplastic resin composition were prepared in the same manner as in Example 1, except that 0.3 parts by weight of potassium persulfate and 0.3 parts by weight of t-dodecyl mercaptan were not added when a polymerization conversion rate reached 30% and added when a polymerization conversion rate reached 15%, and the temperature was raised.

**Comparative Example 2**

Comparative Example 2 was intended to prepare a diene-based rubber polymer, a graft polymer, and a thermoplastic resin composition in the same manner as in Example 1, except that 0.3 parts by weight of potassium persulfate and 0.3 parts by weight of t-dodecyl mercaptan were not added when a polymerization conversion rate reached 30% and added when a polymerization conversion rate reached 80%, and the temperature was raised, but it was difficult to polymerize a diene-based rubber polymer until a polymerization conversion rate reached 80% using only a coordination metal catalyst, so polymerization was stopped midway.

**Comparative Example 3**

<Preparation of diene-based rubber polymer>

55 parts by weight of ion-exchanged water, 100 parts by weight of 1,3-butadiene, 1.5 parts by weight of a $C_{16}$ to $C_{18}$ fatty acid metal salt, 0.15 parts by weight of potassium carbonate, and 0.3 parts by weight of t-dodecyl mercaptan were added to a nitrogen-substituted reactor. Then, the temperature of the reactor was raised to 70 °C. 0.3 parts by weight of potassium persulfate was added to the reactor, and polymerization was initiated and performed. When a polymerization conversion rate reached 40%, 0.3 parts by weight of potassium persulfate was batch-added. Then, polymerization was performed while slowly raising the temperature of the reactor to 80 °C. When a polymerization conversion rate reached 93%, polymerization was terminated to prepare a diene-based rubber polymer latex.

<Preparation of graft polymer>

A monomer mixture including 30 parts by weight of styrene, 10 parts by weight of acrylonitrile, 100 parts by weight of ion-exchanged water, 0.05 parts by weight of t-butyl hydroperoxide, 0.5 parts by weight of potassium rosinate, and 0.5 parts by weight of t-dodecyl mercaptan was prepared.

Then, an activator mixture including 0.0100 parts by weight of dextrose, 0.0100 parts by weight of tetrasodium pyrophosphate, and 0.0010 parts by weight of ferrous sulfate was prepared.

60 parts by weight (based on a solid content) of the diene-based rubber polymer latex and 10 parts by weight of ion-exchanged water were added to a nitrogen-substituted reactor, and the temperature of the reactor was raised to 55 °C. Polymerization was performed while continuously adding the monomer mixture and the activator mixture to the reactor for 2 hours. After the continuous addition was completed, 0.0050 parts by weight of dextrose, 0.0050 parts by weight of tetrasodium pyrophosphate, 0.0005 parts by weight of ferrous sulfate, and 0.1 parts by weight of t-butyl hydroperoxide were added to the reactor, the temperature of the reactor was raised to 80 °C for an hour, and polymerization was terminated to prepare a graft polymer latex.

The graft polymer latex was coagulated, aged, washed, dehydrated, and dried to prepare graft polymer powder.

<Preparation of thermoplastic resin composition>

27.5 parts by weight of the graft polymer powder and 72.5 parts by weight of a vinyl-based non-grafted polymer (styrene/acrylonitrile polymer, 92 HR commercially available from LG Chem.) were mixed to prepare a thermoplastic resin composition.

**Comparative Example 4**

<Preparation of diene-based rubber polymer>

55 parts by weight of ion-exchanged water, 100 parts by weight of 1,3-butadiene, 1.5 parts by weight of a $C_{16}$ to $C_{18}$ fatty acid metal salt, and 0.15 parts by weight of potassium carbonate were added to a nitrogen-substituted reactor. Then, the temperature of the reactor was raised to 35 °C. 0.150 parts by weight of $[(\eta^3\text{-}C_3H_5)Ni(\eta^6\text{-}BHT)]$ $[B(3,5\text{-}(CF_3)_2C_6H_3)_4]$ (wherein BHT is 3,5-di-tert-butyl-4-hydroxytoluene) was added to the reactor, and polymerization was initiated and performed. When a polymerization conversion rate reached 73.1%, polymerization was terminated to prepare a diene-based rubber polymer latex.

<Preparation of graft polymer>

A monomer mixture including 30 parts by weight of styrene, 10 parts by weight of acrylonitrile, 100 parts by weight of ion-exchanged water, 0.05 parts by weight of t-butyl hydroperoxide, 0.5 parts by weight of potassium rosinate, and 0.5 parts by weight of t-dodecyl mercaptan was prepared.

Then, an activator mixture including 0.0100 parts by weight of dextrose, 0.0100 parts by weight of tetrasodium pyrophosphate, and 0.0010 parts by weight of ferrous sulfate was prepared.

60 parts by weight (based on a solid content) of the diene-based rubber polymer latex and 10 parts by weight of ion-exchanged water were added to a nitrogen-substituted reactor, and the temperature of the reactor was raised to 55 °C. Polymerization was performed while continuously adding the monomer mixture and the activator mixture to the reactor for 2 hours. After the continuous addition was completed, 0.0050 parts by weight of dextrose, 0.0050 parts by weight of tetrasodium pyrophosphate, 0.0005 parts by weight of ferrous sulfate, and 0.1 parts by weight of t-butyl hydroperoxide were added to the reactor, the temperature of the reactor was raised to 80 °C for an hour, and polymerization was terminated to prepare a graft polymer latex.

The graft polymer latex was coagulated, aged, washed, dehydrated, and dried to prepare graft polymer powder.

<Preparation of thermoplastic resin composition>

27.5 parts by weight of the graft polymer powder and 72.5 parts by weight of a vinyl-based non-grafted polymer (styrene/acrylonitrile polymer, 92 HR commercially available from LG Chem.) were mixed to prepare a thermoplastic resin composition.

**Experimental Example 1**

The physical properties of the diene-based rubber polymers according to Examples and Comparative Examples were measured by the methods described below, and results thereof are shown in Tables 1 and 2 below.

1) Final polymerization conversion rate (%): calculated by the following equation.

Final polymerization conversion rate (%) = [(Total weight of monomers added until polymerization was terminated) - (Total weight of unreacted monomers when polymerization was terminated)]/(Total weight of monomers added until polymerization was terminated) $\times$ 100

2) Contents (mol%) of 1,4-cis bond, 1,4-trans bond, and 1,2-bond in microstructure: calculated by a Hampton method using an infrared spectrometer.

3) Glass transition temperature (°C): measured using a differential scanning calorimeter.

4) Gel content (wt%): Each diene-based rubber polymer latex according to Examples and Comparative Examples was coagulated with a dilute aqueous solution of sulfuric acid and then washed. The washed material was primarily dried in a vacuum oven set at 60 °C for 24 hours and cut into sections with scissors. 1 g of the section was added to 100 g of toluene and stored in a dark room set at 23 °C for 48 hours so that the section was separated into a sol and a gel. Then, the gel was secondarily dried in an oven set at 85 °C for 6 hours, and the secondarily dried material was weighed. The weight of the secondarily dried material and the weight of the section used in the preparation of the secondarily dried material were substituted into the following equation to calculate a gel content.

Gel content(wt%) = (Weight of secondarily dried material)/(Weight of section used in preparation of secondarily dried material) $\times$ 100

**Experimental Example 2**

Each thermoplastic resin composition according to Examples and Comparative Examples was extruded to prepare a pellet, and the pellet was injection-molded to prepare a sample. The physical properties of the sample were measured by the methods described below, and results thereof are shown in Tables 1 and 2 below.

1) Room-temperature impact strength (kgf • cm/cm, 1/4 In): measured at 25 °C in accordance with ASTM D256.

2) Low-temperature impact strength (kgf • cm/cm, 1/4 In): measured at - 20 °C in accordance with ASTM D256.

3) Tensile strength (kg/cm$^2$): measured at 25 °C in accordance with ASTM D638.

[Table 1]

| Classification | | Example 1 | Example 2 | Example 3 |
|---|---|---|---|---|
| Time of addition of radical initiator (polymerization conversion rate, %) | | 30 | 50 | 70 |
| Final polymerization conversion rate (%) | | 92.9 | 93.6 | 93.1 |
| Microstructure | 1,4-cis bond | 41 | 52 | 66 |
| | 1,4-trans bond | 45 | 38 | 25 |
| | 1,2-vinyl bond | 14 | 10 | 9 |
| Glass transition temperature (°C) | | -87.1 | -92.6 | -97.3 |
| Gel content (wt%) | | 76.4 | 73.2 | 71.0 |
| Room-temperature impact strength (kgf • cm/cm) | | 27.6 | 28.3 | 29.1 |
| Low-temperature impact strength (kgf • cm/cm) | | 11.5 | 12.3 | 13.6 |
| Tensile strength (kg/cm$^2$) | | 519 | 534 | 531 |

[Table 2]

| Classification | | Comparative Example 1 | Comparative Example 2 | Comparative Example 3 | Comparative Example 4 |
|---|---|---|---|---|---|
| Time of addition of radical initiator (polymerization conversion rate, %) | | 15 | 80 | 0, 40 | - |
| No use of radical initiator | | - | - | - | ○ |
| No use of coordination metal catalyst | | - | - | ○ | - |
| Final polymerization conversion rate (%) | | 92.8 | - | 93.2 | 73.1 |
| Microstructure | 1,4-cis bond | 28 | - | 21 | 85 |
| | 1,4-trans bond | 57 | - | 61 | 12 |
| | 1,2-vinyl bond | 15 | - | 18 | 3 |
| Glass transition temperature (°C) | | -82.9 | - | -80.6 | -103.1 |
| Gel content (wt%) | | 84.3 | - | 87.4 | 51.2 |
| Room-temperature impact strength (kgf • cm/cm) | | 26.7 | - | 26.5 | 27.1 |
| Low-temperature impact strength (kgf • cm/cm) | | 10.8 | - | 10.3 | 10.9 |
| Tensile strength (kg/cm$^2$) | | 481 | - | 464 | 411 |

Referring to Tables 1 and 2, the diene-based rubber polymers according to Examples 1 to 3, in which a radical initiator was added when a polymerization conversion rate was 30 to 70%, exhibited high final polymerization conversion rates, and thus preparation efficiency was excellent. Also, it can be seen that the diene-based rubber polymers according to Examples 1 to 3 had a well-adjusted microstructure by including appropriate amounts of a 1,4-cis bond, a 1,4-trans bond, and a 1,2-vinyl bond. Also, since the diene-based rubber polymers according to Examples 1 to 3 had the above-described microstructure, graft polymers having a low glass transition temperature, an appropriate gel content, excellent room-temperature and low-temperature impact strength, and excellent tensile strength could be prepared. However, in the case of Comparative Example 1 in which a radical initiator was added when a polymerization conversion rate was 15%, it can be seen that, since the diene-based rubber polymer did not include appropriate amounts of a 1,4-cis bond, a 1,4-trans bond, and a 1,2-vinyl bond despite a high final polymerization conversion rate, the microstructure was not adjusted well. Also, since the diene-based rubber polymer according to Comparative Example 1 exhibited a high glass transition temperature and a high gel content due to the microstructure compared to Examples, a graft polymer whose room-temperature and low-temperature impact strength and tensile strength were excellent could not be prepared.

In the case of Comparative Example 2 which was intended to add a radical initiator when a polymerization conversion rate was 80%, it was difficult to perform polymerization until a polymerization conversion rate reached 80% using only a coordination metal catalyst, so polymerization was inevitably stopped midway.

In the case of Comparative Example 3 which did not use a coordination metal catalyst, it can be seen that, since the diene-based rubber polymer did not include appropriate amounts of a 1,4-cis bond, a 1,4-trans bond, and a 1,2-vinyl bond despite a high final polymerization conversion rate, the microstructure was not adjusted well. Also, since the diene-based rubber polymer exhibited a high glass transition temperature and a high gel content due to the microstructure compared to Examples, a graft polymer whose room-temperature and low-temperature impact strength and tensile strength were excellent could not be prepared.

In the case of Comparative Example 4 in which a coordination metal catalyst was added only before the initiation of polymerization without use of a radical initiator, the diene-based rubber polymer exhibited a low final polymerization conversion rate. Also, it can be seen that, since a crosslinking reaction did not properly proceed, appropriate amounts of a 1,4-cis bond, a 1,4-trans bond, and a 1,2-vinyl bond were not included, and as a result, the microstructure was not adjusted well. Also, since the diene-based rubber polymer exhibited a very low gel content due to the microstructure despite a very low glass transition temperature compared to Examples, a graft polymer whose room-temperature and low-temperature impact strength and tensile strength were excellent could not be prepared.

## Claims

1. A method of preparing a diene-based rubber polymer, comprising:

   initiating polymerization of a monomer in the presence of a coordination metal catalyst; and
   adding a radical initiator when a polymerization conversion rate is 20 to 75% and performing the polymerization of the monomer,
   wherein the monomer is a diene-based monomer; or a diene-based monomer and an aromatic vinyl-based monomer,
   wherein the coordination metal catalyst comprises nickel and a ligand,
   wherein the ligand is one or more selected from the group consisting of an allyl, an arene-sulfide, and an arene-stibine.

2. The method of preparing a diene-based rubber polymer of claim 1, wherein the radical initiator is added when the polymerization conversion rate is 30 to 70%.

3. The method of preparing a diene-based rubber polymer of claim 1, wherein an amount of the coordination metal catalyst is 0.001 to 0.500 parts by weight with respect to 100 parts by weight of a total amount of the monomer added in the method of preparing a diene-based rubber polymer.

4. The method of preparing a diene-based rubber polymer of claim 1, wherein the coordination metal catalyst is $[(\eta^3\text{-}C_3H_5)Ni(\eta^6\text{-}BHT)][B(3,5\text{-}(CF_3)_2C_6H_3)_4]$, and the BHT is 3,5-di-tert-butyl-4-hydroxytoluene.

5. The method of preparing a diene-based rubber polymer of claim 1, wherein an amount of the radical initiator is 0.10 to 2.00 parts by weight with respect to 100 parts by weight of a total amount of the monomer added in the method of preparing a diene-based rubber polymer.

6. The method of preparing a diene-based rubber polymer of claim 1, wherein the radical initiator is one or more selected from the group consisting of sodium persulfate, potassium persulfate, ammonium persulfate, t-butyl hydroperoxide, cumene hydroperoxide, ferrous sulfate, dextrose, and tetrasodium pyrophosphate.

7. The method of preparing a diene-based rubber polymer of claim 1, wherein the polymerization is terminated when the polymerization conversion rate is 90% or more.

8. The method of preparing a diene-based rubber polymer of claim 1, wherein the polymerization is emulsion polymerization.

9. A method of preparing a graft polymer, comprising:

preparing a diene-based rubber polymer by the preparation method of claim 1; and
graft-polymerizing an aromatic vinyl-based monomer and a vinyl cyanide-based monomer onto the diene-based rubber polymer.

**Patentansprüche**

1. Verfahren zur Herstellung eines Kautschukpolymers auf Dienbasis, umfassend:

Initiieren der Polymerisation eines Monomers in Gegenwart eines Koordinationsmetallkatalysators; und
Zugeben eines Radikalinitiators, wenn eine Polymerisationsumwandlungsrate 20 bis 75 % beträgt, und Durchführen der Polymerisation des Monomers,
wobei das Monomer ein Monomer auf Dienbasis oder ein Monomer auf Dienbasis und ein Monomer auf Basis von aromatischem Vinyl ist,
wobei der Koordinationsmetallkatalysator Nickel und einen Liganden umfasst,
wobei der Ligand einer oder mehrere ist, ausgewählt aus der Gruppe bestehend aus einem Allyl,
einem Arensulfid und einem Arenstibin.

2. Verfahren zur Herstellung eines Kautschukpolymers auf Dienbasis nach Anspruch 1, wobei der Radikalinitiator zugegeben wird, wenn die Polymerisationsumwandlungsrate 30 bis 70 % beträgt.

3. Verfahren zur Herstellung eines Kautschukpolymers auf Dienbasis nach Anspruch 1, wobei eine Menge des Koordinationsmetallkatalysators 0,001 bis 0,500 Gewichtsteile, bezogen auf 100 Gewichtsteile einer Gesamtmenge des in dem Verfahren zur Herstellung eines Kautschukpolymers auf Dienbasis zugegebenen Monomers, beträgt.

4. Verfahren zur Herstellung eines Kautschukpolymers auf Dienbasis nach Anspruch 1, wobei der Koordinationsmetallkatalysator $[(\eta^3\text{-}C_3H_5)Ni(\eta^6\text{-}BHT)][B(3,5\text{-}(CF_3)_2C_6H_3)_4]$ ist und das BHT 3,5-Di-tert-butyl-4-hydroxytoluol ist.

5. Verfahren zur Herstellung eines Kautschukpolymers auf Dienbasis nach Anspruch 1, wobei eine Menge des Radikalinitiators 0,10 bis 2,00 Gewichtsteile, bezogen auf 100 Gewichtsteile einer Gesamtmenge des in dem Verfahren zur Herstellung eines Kautschukpolymers auf Dienbasis zugegebenen Monomers, beträgt.

6. Verfahren zur Herstellung eines Kautschukpolymers auf Dienbasis nach Anspruch 1, wobei der Radikalinitiator einer oder mehrere ist, ausgewählt aus der Gruppe bestehend aus Natriumpersulfat, Kaliumpersulfat, Ammoniumpersulfat, t-Butylhydroperoxid, Cumolhydroperoxid, Eisensulfat, Dextrose und Tetranatriumpyrophosphat.

7. Verfahren zur Herstellung eines Kautschukpolymers auf Dienbasis nach Anspruch 1, wobei die Polymerisation beendet wird, wenn die Polymerisationsumwandlungsrate 90 % oder mehr beträgt.

8. Verfahren zur Herstellung eines Kautschukpolymers auf Dienbasis nach Anspruch 1, wobei die Polymerisation Emulsionspolymerisation ist.

9. Verfahren zur Herstellung eines Pfropfpolymers, umfassend:

Herstellen eines Kautschukpolymers auf Dienbasis durch das Herstellungsverfahren nach Anspruch 1; und
Pfropfpolymerisieren eines Monomers auf Basis von aromatischem Vinyl und eines Monomers auf Basis von Vinylcyanid auf das Kautschukpolymer auf Dienbasis.

**Revendications**

1. Procédé de préparation d'un polymère de caoutchouc à base de diène, consistant à :

initier une polymérisation d'un monomère en présence d'un catalyseur métallique de coordination ; et
ajouter un initiateur de radicaux quand un taux de conversion de polymérisation est 20 à 75 % et effectuer la polymérisation du monomère,
dans lequel le monomère est un monomère à base de diène ; ou un monomère à base de diène et un monomère à base de vinyle aromatique,
dans lequel le catalyseur métallique de coordination comprend du nickel et un ligand,
dans lequel le ligand est un ou plusieurs éléments sélectionnés dans le groupe constitué d'un allyle, un arène-sulfure et un arène-stibine.

2. Procédé de préparation d'un polymère de caoutchouc à base de diène selon la revendication 1, dans lequel l'initiateur de radicaux est ajouté quand le taux de conversion de polymérisation est 30 à 70 %.

3. Procédé de préparation d'un polymère de caoutchouc à base de diène selon la revendication 1, dans lequel une quantité du catalyseur métallique de coordination est 0,001 à 0,500 partie en poids pour 100 parties en poids d'une quantité totale du monomère ajoutée dans le procédé de préparation d'un polymère de caoutchouc à base de diène.

4. Procédé de préparation d'un polymère de caoutchouc à base de diène selon la revendication 1, dans lequel le catalyseur métallique de coordination est $[(\eta^3\text{-}C_3H_5)Ni(\eta^6\text{-}BHT)][B(3,5\text{-}(CF_3)_2C_6H_3)_4]$ et le BHT est 3,5-di-tert-butyl-4-hydroxytoluène.

5. Procédé de préparation d'un polymère de caoutchouc à base de diène selon la revendication 1, dans lequel une quantité de l'initiateur de radicaux est 0,10 à 2,00 parties en poids pour 100 parties en poids d'une quantité totale du monomère ajoutée dans le procédé de préparation d'un polymère de caoutchouc à base de diène.

6. Procédé de préparation d'un polymère de caoutchouc à base de diène selon la revendication 1, dans lequel l'initiateur de radicaux est un ou plusieurs éléments sélectionnés dans le groupe constitué de persulfate de sodium, persulfate de potassium, persulfate d'ammonium, hydroperoxyde de t-butyle, hydroperoxyde de cumène, sulfate ferreux, dextrose et pyrophosphate de tétrasodium.

7. Procédé de préparation d'un polymère de caoutchouc à base de diène selon la revendication 1, dans lequel la polymérisation est terminée quand le taux de conversion de polymérisation est égal ou supérieur à 90 %.

8. Procédé de préparation d'un polymère de caoutchouc à base de diène selon la revendication 1, dans lequel la polymérisation est une polymérisation en émulsion.

9. Procédé de préparation d'un polymère greffé, consistant à :

préparer un polymère de caoutchouc à base de diène par le procédé de préparation selon la revendication 1 ; et
polymériser par greffage un monomère à base de vinyle aromatique et un monomère à base de cyanure de vinyle sur le polymère de caoutchouc à base de diène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009108255 A

- US 3497488 A